# EUROPEAN PATENT APPLICATION

(11) **EP 2 508 998 A1**
(43) Date of publication of application: **10.10.2012**
(21) Application number: 10832528.3
(22) Date of filing: 15.03.2010
(51) Int. Cl.: G06F 13/00

(54) **DATA STORAGE DEVICE AND DATA MANAGEMENT METHOD**

(30) Priority: 30.11.2009 US 264959 P
(71) Applicant: Silicon Motion, Inc., Jhubei City, Hsinchu County Taiwan 302 (TW); Transcend Information, Inc., Taipei, Taiwan 114 (TW)
(72) Inventor: HOU, Hui-Chuan, Taiwan 615 (CN); WANG, Chi-Lung, Zhubei Hsinchu County Taiwan 302 (CN); CHEN, Tsang-Yi, Jinshan Township Taipei County Taiwan 208 (CN); FANG, Wen-Jeng, Neihu Dist. Taipei Taiwan 114 (CN); XIE, Yuan-Tai, Beidou Township Changhua County Taiwan 521 (CN)
(74) Representative: Fuchs
(86) International application number: PCT/CN2010/071055
(87) International publication number: WO 2011/063621

(57) **Abstract**

A data storage device and its data management method are provided in the embodiments of the present invention. The data storage device, which is coupled to a host, includes a storage media with data sectors for data storage, and a controller coupled to the storage media. The controller receives from the host one or more read commands and one or more corresponding logic read addresses, reads multiple first data sectors according to the read commands and the corresponding logic read addresses from the storage media, outputs data from the first data sectors to the host, calculates the effective time related to said one or more read commands, calculates an average data transmitting flux according to the number of the first data sectors and the effective time, and judges whether the average data transmitting flux exceeds a predetermined threshold or not. If yes, a bar program is executed by the controller to prevent access from the storage media.

## Description

### BACKGROUND OF THE INVENTION

### Field of the Invention

The disclosed embodiments relate to data storage devices and data management methods, and more particularly relate to data storage devices with anti-copy protection and data management methods thereof.

### Background Technology

With the development of information processing technology, requirements for data storage devices have been significantly increased. Portable data storage devices, such as memory cards or USB flash drives (UFDs), which can provide hand-held convenience, large data storage capacity and efficient access, are commonly used in a variety of consumer electronic devices, including mobile phones, digital cameras, personal digital assistants (PDAs) and so on. In addition, with the popularity of portable data storage devices growing, document security for data stored in the data storage devices, such as authorized music or film documents, has become a significant issue.

Conventionally, to address the security flaws related to illegal copying of data storage devices, encryption and decryption techniques, or password verification techniques have typically been developed and implemented. However, each technique may have different drawbacks.

As for encryption and decryption techniques, specific algorithms, such as a cryptographic function, may be applied to encrypt data during data write-in and perform corresponding decryption when the encrypted data is accessed. However, the cryptographic function generally consumes considerable processing time, thereby significantly degrading the performance of data read-out or data write-in process. Moreover, use of the same algorithm is required for both the encryption process and the decryption process. For example, a personal computer or a mobile phone is required to perform corresponding decryption processes after the encryption process is performed on a memory card. That is, it is necessary for the personal computer or the mobile phone to be provided with a corresponding process, so as to allow a user to play music or films on the personal computer or the mobile phone. Thus, the process is inconvenient for users; thereby, hindering the memory card of becoming an even more reliable general purpose device for use.

As for the password verification techniques, when a user accesses data stored in a data storage device, the user needs to enter a corresponding password for verification. Only when the password input by the user is conformed to be the stored password, is when access to the data stored in the data storage device can be obtained. However, a single password is prone to theft; thus, mitigating reliable anti-copy protection.

Accordingly, there is a need for easy, reliable and feasible data management methods capable of preventing data stored in data storage devices from being illegally copied.

### SUMMARY OF THE INVENTION

An embodiment of the invention provides a data storage device, which is coupled to a host, including a storage media and a controller. The storage media includes a plurality of data sectors for storing data. The controller is coupled to the storage media for sequentially receiving one or more read commands and one or more logical addresses (corresponding to the one or more read commands) from the host, reading a plurality of first data sectors from the storage media according to the one or more read commands and the corresponding one or more logical addresses, outputting data of the first data sectors to the host, calculating a valid duration required for the one or more read commands, calculating an average data throughput according to the number of the first data sectors and the valid duration, and determining whether the average data throughput exceeds a predetermined threshold. In an embodiment, the controller performs a blocking procedure to prevent the storage media from being accessed when the average data throughput exceeds the predetermined threshold.

In addition, an embodiment of the invention provides a data storage device, which is coupled to a host, including a storage media and a controller. The storage media includes a plurality of data sectors for storing a media file. The media file having a plurality of logical address windows is stored into the data sectors with sequential logical addresses. Further, the controller is coupled to the storage media for receiving a first read command and a first logical address (corresponding to the first read command) from the host, determining whether the first logical address is located in a first logical address window of the logical address windows, activating a timer and a counter when the first logical address is located in the first logical address window, reading a plurality of first data sectors from the storage media according to the first logical address, outputting data of the first data sectors to the host, obtaining a valid duration calculated by the timer and the number of the first data sectors counted by the counter when any logical address corresponding to the first data sectors is outside of the first logical address window, calculating an average data throughput according to the number of the first data sectors and the valid duration, and determining whether the average data throughput exceeds a predetermined threshold. In an embodiment, the controller performs a blocking procedure to prevent the storage media from being accessed when the average data throughput exceeds the predetermined threshold.

In addition, an embodiment of the invention provides a data management method for a data storage device. The data storage device includes a storage media having a plurality of data sectors. The data management method includes the steps of: receiving a plurality of read commands and corresponding logical addresses, wherein each logical address is located in a first logical address window; reading a plurality of first data sectors from the storage media according to the read commands and the logical addresses; outputting data of the first data sectors; calculating a valid duration required for the read commands; calculating an average data throughput according to the number of the first data sectors and the valid duration; and performing a blocking procedure to prevent the storage media from being accessed when the average data throughput exceeds a predetermined threshold.

In addition, an embodiment of the invention provides a data management method for a data storage device having a storage media. The storage media includes a plurality of data sectors for storing a media file and the media file includes a plurality of logical address windows. The data management method includes the steps of: receiving a first read command and a corresponding first logical address, wherein the first logical address is located in a first logical address window; starting to calculate a valid duration; reading a plurality of first data sectors from the storage media according to the first read command and the first logical address; sequentially outputting data of the first data sectors; obtaining the number of the first data sectors and the valid duration when any logical address corresponding to the first data sectors is outside of the first logical address window; calculating an average data throughput according to the number of the first data sectors and the valid duration; and performing a blocking procedure to prevent the storage media from being accessed when the average data throughput exceeds a predetermined threshold.

In addition, an embodiment of the invention provides a data management method for a data storage device having a storage media. The storage media includes a plurality of data sectors for storing a media file and the media file includes a plurality of logical address windows. The data management method includes the steps of: receiving a first read command and a corresponding first logical address, wherein the first logical address is located in a first logical address window; starting to calculate a valid duration; reading a plurality of first data sectors from the storage media according to the first read command and the first logical address; sequentially outputting data of the first data sectors; obtaining the valid duration when any logical address corresponding to the first data sectors is outside of the first logical address window; and performing a blocking procedure to prevent the storage media from being accessed when the valid duration is below a predetermined threshold.

In addition, an embodiment of the invention provides a data management method for a data storage device having a storage media. The storage media includes a plurality of data sectors for storing a media file and the media file includes a plurality of logical address windows. The data management method includes the steps of: receiving a first read command and a corresponding first logical address, wherein the first logical address is located in a first logical address window; starting to calculate a valid duration; reading a plurality of first data sectors from the storage media according to the first read command and the first logical address; sequentially outputting data of the first data sectors; receiving a second command and a corresponding second logical address; obtaining the number of the first data sectors and the valid duration when the second logical address is outside of the first logical address window; calculating an average data throughput according to the number of the first data sectors and the valid duration; and performing a blocking procedure to prevent the storage media from being accessed when the average data throughput exceeds a predetermined threshold.

In addition, an embodiment of the invention provides a data management method for a data storage device having a storage media. The storage media includes a plurality of data sectors for storing a media file and the media file includes a plurality of logical address windows. The data management method includes the steps of: receiving a first read command and a corresponding first logical address, wherein the first logical address is located in a first logical address window; starting to calculate a valid duration; reading a plurality of first data sectors from the storage media according to the first read command and the first logical address; sequentially outputting data of the first data sectors; receiving a second command and a corresponding second logical address; obtaining the valid duration when the second logical address is outside of the first logical address window; and performing a blocking procedure to prevent the storage media from being accessed when the valid duration is below a predetermined threshold.

In addition, an embodiment of the invention provides a data management method for a data storage device having a storage media. The storage media includes a plurality of data sectors for storing a media file and the media file includes a plurality of logical address windows. The data management method includes the steps of: sequentially receiving one or more read commands and corresponding one or more logical addresses thereto, wherein a first logical address corresponding to a first read command is located in a first logical address window; reading a plurality of first data sectors from the storage media according to the one or more read commands and the corresponding one or more logical addresses; activating a counter for counting the number of the read commands which have been executed; obtaining a count from the counter when any logical address corresponding to the first data sectors is outside of the first logical address window; and performing a blocking procedure to prevent the storage media from being accessed when the count from the counter is equal to or below a predetermined threshold.

In addition, an embodiment of the invention provides a data management method for a data storage device having a storage media. The storage media includes a plurality of data sectors for storing a media file and the media file includes a plurality of logical address windows. The data management method includes the steps of: sequentially receiving one or more read commands and corresponding one or more logical addresses thereto, wherein a first logical address corresponding to a first read command is located in a first logical address window; reading a plurality of first data sectors from the storage media according to the one or more read commands and the corresponding one or more logical addresses; activating a counter for counting the number of the read commands which have been executed; obtaining a count from the counter when a second logical address corresponding to a second read command is outside of the first logical address window; and performing a blocking procedure to prevent the storage media from being accessed when the count from the counter is equal to or below a predetermined threshold.

A detailed description is given in the following embodiments with reference to the accompanying drawings.

### DESCRIPTION OF THE DRAWINGS

FIG. 1 is a schematic diagram illustrating a data storage device according to an embodiment of the invention;

FIG. 2 is a schematic diagram illustrating an embodiment of logical address windows of the invention;

FIG. 3 is a flowchart illustrating a data management method according to an embodiment of the invention;

FIG. 4 is a flowchart illustrating a data management method according to another embodiment of the invention;

FIG. 5 is a schematic diagram illustrating another embodiment of logical address windows of the invention;

FIG. 6 is a flowchart illustrating a data management method according to another embodiment of the invention;

FIG. 7 is a flowchart illustrating a data management method according to another embodiment of the invention;

FIG. 8 is a schematic diagram illustrating another embodiment of logical address windows of the invention;

FIG. 9 is a flowchart illustrating a data management method according to another embodiment of the invention;

FIG. 10 is a flowchart illustrating a data management method according to another embodiment of the invention;

FIG. 11 is a schematic diagram illustrating another embodiment of logical address windows of the invention; and

FIG. 12 is a diagram illustrating an embodiment of a content table of the invention.

### DESCRIPTION OF DRAWING SYMBOLS

10~ data storage device;

102~host;

104∼controller;

106~ storage media; and

120~ content table.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

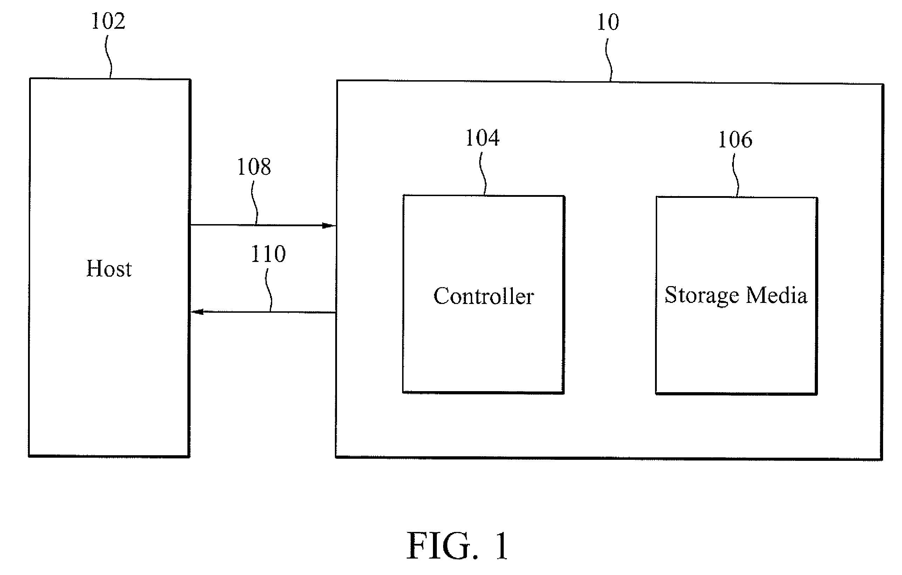

FIG. 1 is a schematic diagram illustrating a data storage device 10 according to an embodiment of the invention. Referring to the embodiment of FIG. 1, the data storage device 10 is coupled to a host 102 and includes a storage media 106 and a controller 104. For example, the host 102 may be a personal computer and the data storage device 10 may be a USB flash drive (UFD) coupled to the host via a universal serial bus (USB) interface for data transmission. According to another embodiment, the host 102 may be a mobile phone and the data storage device 10 may be a secure digital (SD) card, a multimedia card (MMC), a Micro SD card, a memory stick (MS) card or a memory stick Pro (MS Pro) card for data transmission according to an SD/ Micro SD interface, MMC interface, MS interface or MS Pro interface.

As shown in FIG. 1, the storage media 106 generally includes a large number of blocks, each including multiple pages and each page may include a plurality of data sectors for storing data.

In operation, the controller 104 is coupled between the storage media 106 and the host 102 for receiving commands with control signals, logical addresses and data from the host 102 and accessing the storage media 106 accordingly. For example, the host 102 may issue read commands and corresponding logical addresses to the controller 104 via a control bus 108. Next, the controller 104 accesses corresponding data sectors according to the corresponding logical addresses. Then, data of the data sectors is returned to the host 102 via a data bus 110 after being read out.

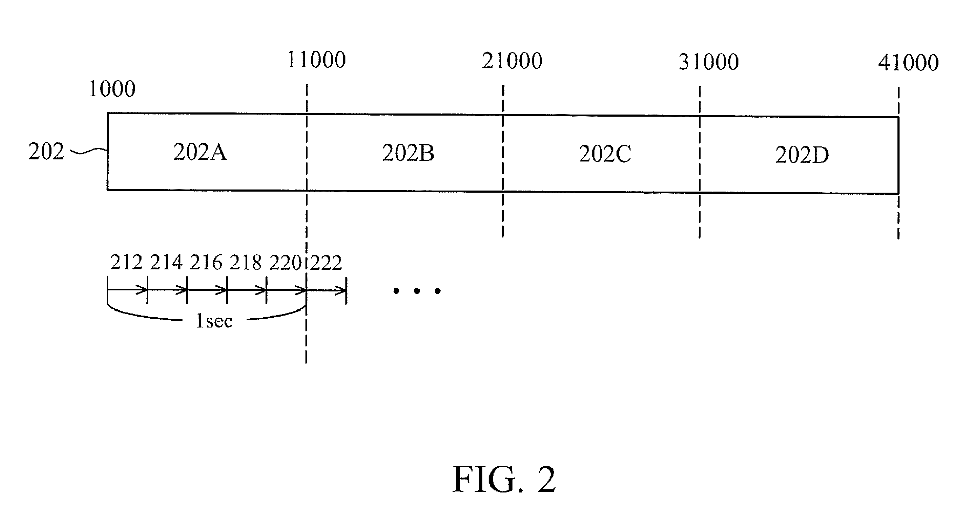

According to an embodiment, one or more media files to be protected against illegal copying, such as authorized music or film files, are stored in the storage media 106. Specifically, each media file may be store into sequential data sectors of the storage media 106 before the data storage device 10 leaves the factory, such that each media file is stored into data sectors with sequential logical addresses. Thus, when the host 102 attempts to read the media files, the host 102 requests data of sequential logical addresses, as shown in FIG. 2.

FIG. 2 is a schematic diagram illustrating an embodiment of logical address windows of the invention. As shown in FIG. 2, a media file 202, such as an authorized audio file, is stored into the data sectors of the storage media 106 with corresponding sequential logical addresses 1000~41000.

Further, the media file 202 may be divided into four logical address windows 202A, 202B, 202C and 202D, but is not limited to this.

Referring to FIG. 2, the logical address window 202A is assigned using logical addresses from 1000 to 11000, the logical address window 202B is assigned using logical addresses from 11000 to 21000, the logical address window 202C is assigned using logical addresses from 21000 to 31000 and the logical address window 202D is assigned using logical addresses from 31000 to 41000. That is, the length of each logical address window is equal to a quarter of the length of the media file 202 and contains 10000 data sectors according to this embodiment.

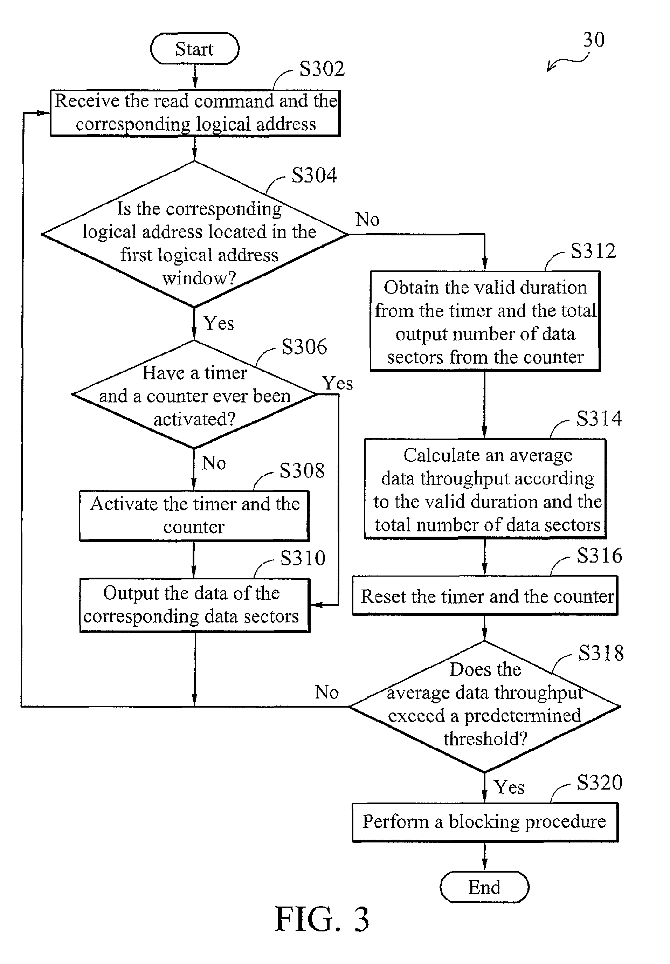

In one embodiment, when the host 102 attempts to duplicate/copy the media file 202, the controller 104 receives a plurality of read commands, start logical addresses and data lengths (for simplicity, hereinafter referred to as read commands 212, 214, 216, 218, 220 and 222). In this case, the logical addresses from 1000 to 3000 are read in response to the read command 212, the logical addresses from 3000 to 5000 are read in response to the read command 214, the logical addresses from 5000 to 7000 are read in response to the read command 216, the logical addresses from 7000 to 9000 are read in response to the read command 218, the logical addresses from 9000 to 11000 are read in response to the read command 220, the logical addresses from 11000 to 13000 are read in response to the read command 222, and so on. A detailed description of data management methods for the data storage device 10 is illustrated herein below with reference to FIG. 3.

FIG. 3 is a flowchart illustrating a data management method 30 according to an embodiment of the invention.

Referring to FIGs. 1, 2 and 3, when a user attempts to duplicate the media file 202, the host 102 promptly issues a series of read commands, such as 212, 214, 216, 218, 220 and 222 etc., to the controller 104. The time interval between each read command is very short, such as approximately a few ten microseconds (µs) up to hundreds microseconds.

In this situation, when receiving the first read command 212 and the first logical address 1000 corresponding to the first read command 212 (i.e., a start logical address to be read) (step S302), the controller 104 subsequently determines whether the first logical address 1000 is located in one of the four logical address windows 202A, 202B, 202C and 202D of the media file 202 (step S304).

In this embodiment, it is assumed that the first logical address 1000 is located in the first logical address window 202A of the media file 202, and a timer and a counter have not been activated yet (step S306). Thus, the controller 104 further activates the timer and the counter (step S308). Specifically, the timer starts to calculate a valid duration and the counter starts to count the number of data sectors which have been output to the host 102.

Next, the controller 104 reads data stored in corresponding data sectors from the storage media 106 according to the first read command 212 and the first logical address 1000 (i.e., the start logical address to be read), and then outputs the data of the corresponding data sectors to the host 102 (step S310). For example, the controller 104 may read 2000 data sectors from the storage media 106 and then output data of the 2000 data sectors to the host 102.

Similarly, the controller 104 receives the read command 214 and the logical address 3000 (i.e., a start logical address to be read) (step S302). Then, the controller 104 determines whether the logical address 3000 is still located the first logical address window 202A of the media file 202 (step S304). In this case, because the timer and the counter have been activated upon executing the read command 212 (step S306), data stored in corresponding data sectors is directly output (step S310). For example, the controller 104 may read 2000 data sectors from the storage media 106 and then output data of the 2000 data sectors to the host 102.

In this manner, the controller 104 further receives the following read commands 216, 218 and 220. As for the process associated with the read commands 216, 218 and 220, it is similar to the process discussed above with respect to the read command 214, and detailed descriptions thereof will be omitted.

Next, the controller 104 receives the second read command 222 and the second logical address 11000 corresponding to the second read command 222 (step S302). As shown in FIG. 2, the second logical address 11000 is no longer located in the first logical address window 202A, i.e., the second logical address 11000 is outside of the first logical address window 202A (step S304). Thus, the controller 104 obtains the valid duration calculated by the timer and the total output number of data sectors counted by the counter. According to the embodiment of FIG. 2, it is assumed that the valid duration required for the read commands which are obtained by the controller 104 from the host 102 is equal to 1 second, and the total output number of data sectors is equal to 10000 (step S312).

Following, the controller 104 calculates average data throughput according to the total number of data sectors 10000 and the valid duration 1 second, i.e., 10000 (step S314).

Next, the timer and the counter are respectively reset (step S316). Following, the controller 104 then determines whether the average data throughput 10000 exceeds a predetermined threshold, e.g., 300 (step S318). When the average data throughput exceeds the predetermined threshold, the controller 104 determines that the host 102 has attempted to duplicate the media file 202. As a result, the controller 104 performs a blocking procedure to prevent the host 102 from accessing the storage media 106 (step S320).

According to an embodiment, the controller 104 may output dummy data or invalid data to the host 102 regardless of the following read commands and logical addresses. According to another embodiment, the blocking procedure is performed to ignore all subsequent commands issued by the host 102. According to another embodiment, the blocking procedure is stopping to supply power to the controller 104, so as to power off the data storage device 10. That is, the blocking procedure may be any appropriate method capable of preventing the host 102 from continuously/further accessing the data storage device 10, including, but not are limited to the aforementioned embodiments. Accordingly, the disclosed technique is advantageous to preventing data, which is stored in the storage media 106, from being illegally copied.

Alternatively, when the average data throughput is below the predetermined threshold, the controller 104 allows the operation of the host 102 on the storage media 106 to proceed.

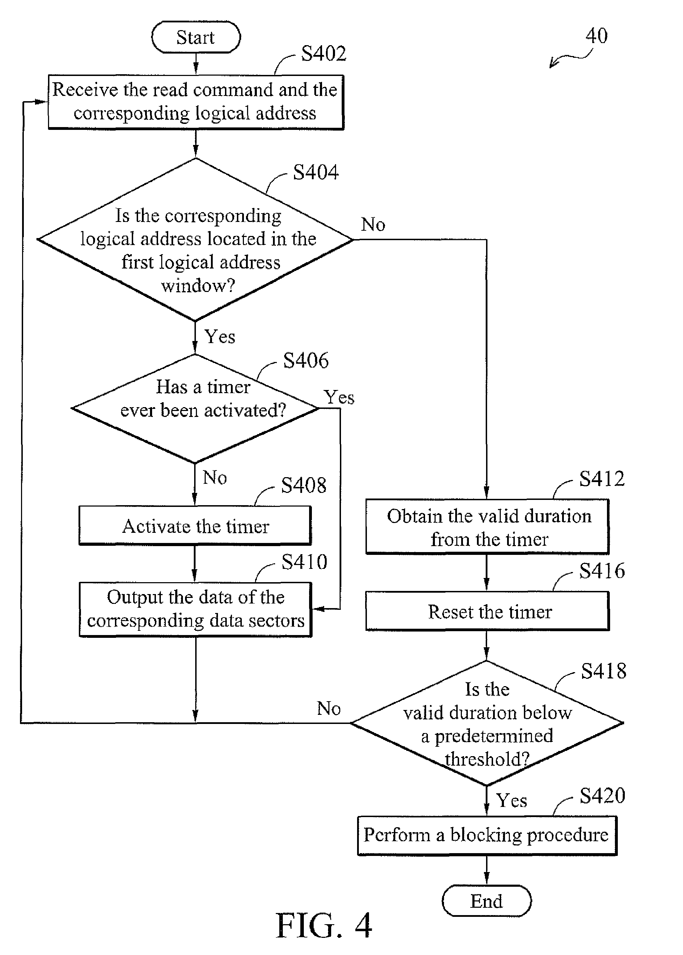

FIG. 4 is a flowchart illustrating a data management method 40 according to another embodiment of the invention. Referring to FIG. 4, steps S402, S404, S410 and S420 are respectively similar to steps S302, S304, S310 and S320 as shown in FIG. 3, while the other steps of this embodiment are described below.

According to the data management method 40, it is noted that only the timer is utilized for elapsed time calculation in steps S406 and S408. Thus, when the controller 104 receives the second read command 222 and the second logical address 11000, the controller 104 obtains the valid duration calculated by the timer, such as 1 second (step S412), and then resets the timer (step S416).

Next, the controller 104 determines whether the valid duration, such as 1 second, is below a predetermined threshold, such as 30 seconds (step S418).

When the valid duration is below the predetermined threshold, the controller 104 performs a blocking procedure (step S420). Note that the blocking procedure is illustrated in the aforementioned embodiments, and hence, a further description thereof is omitted.

When the valid duration is not below the predetermined threshold, the controller 104 allows the operation of the host 102 on the storage media 106 to proceed.

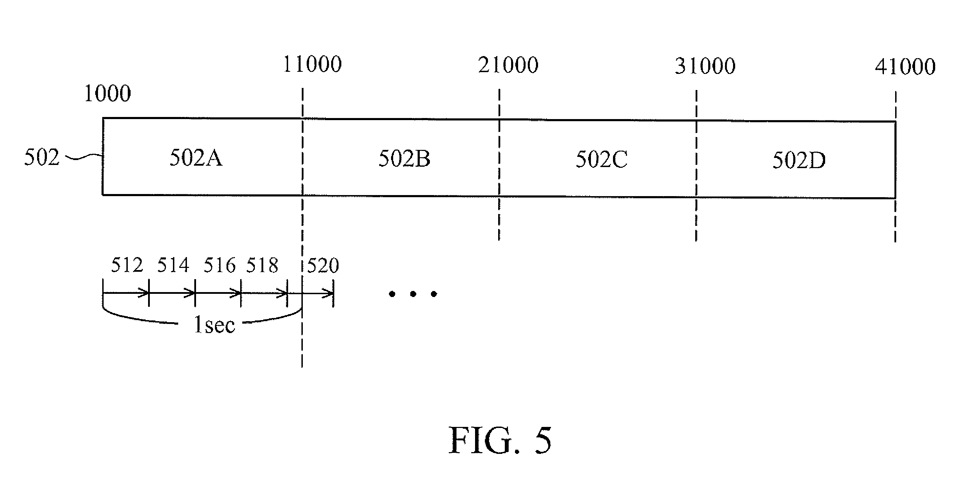

FIG. 5 is a schematic diagram illustrating another embodiment of logical address windows of the invention.

As shown in FIG. 5, another media file 502, such as an authorized audio file, is stored into the data sectors of the storage media 106 with corresponding sequential logical addresses 1000~41000.

In addition, the media file 502 may be divided into four logical address windows 502A, 502B, 502C and 502D, but is not limited to this.

Referring to FIG. 5, the logical address window 502A is assigned using logical addresses from 1000 to 11000, the logical address window 502B is assigned using logical addresses from 11000 to 21000, the logical address window 502C is assigned using logical addresses from 21000 to 31000 and the logical address window 502D is assigned using logical addresses from 31000 to 41000. That is, the length of each logical address window is equal to a quarter of the length of the media file 502 and contains 10000 data sectors according to this embodiment.

In one embodiment, when the host 102 attempts to duplicate/copy the media file 502, the controller 104 receives a plurality of read commands, logical addresses and data lengths (for simplicity, hereinafter referred to as read commands 512, 514, 516, 518 and 520). In this case, the logical addresses from 1000 to 3200 are read in response to the read command 512, the logical addresses from 3200 to 5400 are read in response to the read command 514, the logical addresses from 5400 to 7600 are read in response to the read command 516, the logical addresses from 7600 to 9800 are read in response to the read command 518, the logical addresses from 9800 to 12000 are read in response to the read command 520, and so on.

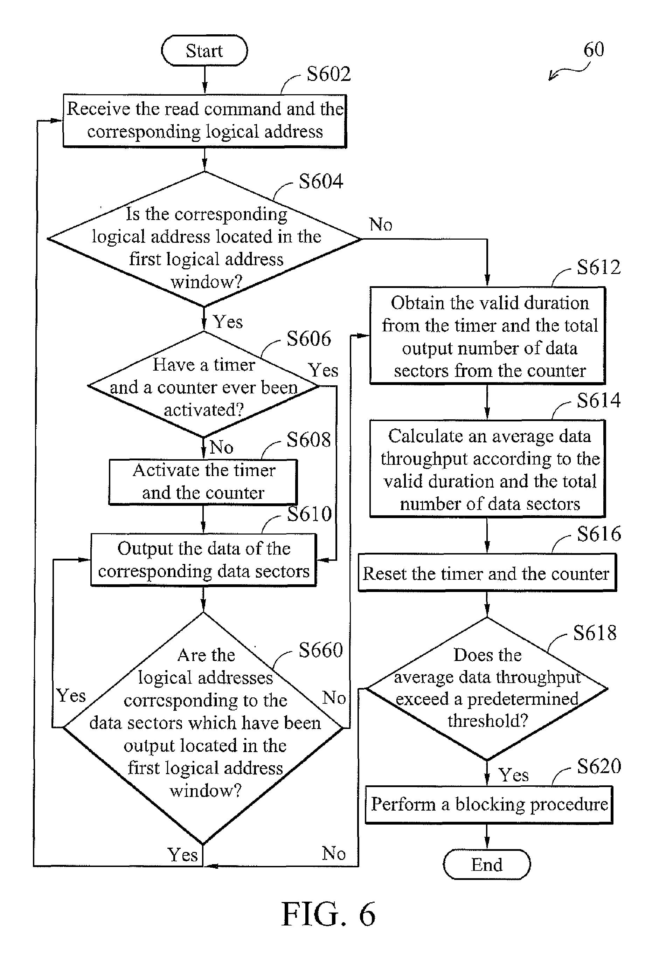

According to this embodiment, it is noted that each logical address window is not equal to integer multiples of the read commands. That is, the address range read by the read command 520 at least is partially located in the first logical address window 502A while the remaining part of the address range is outside of the first logical address window 502A. A detailed description is given below with reference to FIG. 6.

FIG. 6 is a flowchart illustrating a data management method 60 according to another embodiment of the invention.

Referring to FIGs. 1, 5 and 6, when the user attempts to duplicate the media file 502, the host 102 promptly issues a series of read commands, such as 512, 514, 516, 518 and 520 etc., to the controller 104. The time interval between each read command is very short, such as approximately a few ten microseconds (µs) up to hundreds microseconds.

In this situation, when receiving the first read command 512 and the first logical address 1000 corresponding to the first read command 512 (i.e., a start logical address to be read) (step S602), the controller 104 subsequently determines whether the first logical address 1000 is located in one of the four logical address windows 502A, 502B, 502C and 502D of the media file 502 (step S604).

In this embodiment, it is assumed that the first logical address 1000 is located in the first logical address window 502A of the media file 502, and a timer and a counter have not been activated yet (step S606). Thus, the controller 104 further activates the timer and the counter (step S608). Specifically, the timer starts to calculate a valid duration and the counter starts to count the number of data sectors which have been output to the host 102.

Next, the controller 104 reads data stored in corresponding data sectors from the storage media 106 according to the first read command 512 and the first logical address 1000 (i.e., the start logical address to be read), and then outputs the data of the corresponding data sectors to the host 102 (step S610). For example, the controller 104 may read 2200 data sectors from the storage media 106. Further, when sequentially outputting data of the 2200 data sectors, the controller 104 simultaneously determines whether the logical addresses corresponding to the data sectors which have been output are located in the first logical address window 502A (step S660). For example, since the logical address 1000 corresponding to the first data sector which has been output is located in the first logical address window 502A, the controller 104 proceeds to output a next data sector. Since the logical address 1001 corresponding to the next data sector is still located in the first logical address window 502A, the controller 104 proceeds to output a further next data sector. In this embodiment, because the logical address 3199 corresponds to the last data sector retrieved by the read command 512 is still located in the first logical address window 502A, the controller 104 returns to step S602.

Similarly, the controller 104 receives the read command 514 and the logical address 3200 (i.e., a start logical address to be read) (step S602). Then, the controller 104 determines whether the logical address 3200 is still located in the first logical address window 502A of the media file 502 (step S604). In this case, because the timer and the counter have been activated upon executing the read command 512 (step S606), data stored in corresponding data sectors is directly output (step S610). Note that when sequentially outputting the data sectors, the controller 104 simultaneously determines whether the logical addresses corresponding to the data sectors which have been output are located in the first logical address window 502A (step S660). The process is similar to the process discussed above with respect to the read command 512, and hence, a detailed description thereof is omitted.

In this manner, the controller 104 further receives the following read commands 516 and 518. As for the process associated with the read commands 516 and 518 it is similar to the process discussed above with respect to the read command 514, and further descriptions thereof will be omitted.

Next, the controller 104 receives the second read command 520 and the second logical address 9800 corresponding to the second read command 520 (step S602). As shown in FIG. 5, the second logical address 9800 is still located in the first logical address window 502A (step S604). Thus, the controller 104 sequentially outputs data of the corresponding data sectors (step S610) until any logical address corresponding to the data sectors is outside of the first logical address window 502A, such as the logical address 11000 (step S660). In this situation, the controller 104 obtains the valid duration calculated by the timer and the total output number of data sectors counted by the counter. According to the embodiment of FIG. 5, it is assumed that the valid duration required for the read commands which are obtained by the controller 104 from the host 102 is equal to 1 second, and the total output number of data sectors is equal to 10000 (step S612).

Following, the controller 104 calculates an average data throughput according to the total number of data sectors 10000 and the valid duration 1 second, i.e., 10000 (step S614).

Next, the timer and the counter are respectively reset (step S616). Following, the controller 104 then determines whether the average data throughput 10000 exceeds a predetermined threshold, e.g., 300 (step S618). When the average data throughput exceeds the predetermined threshold, the controller 104 determines that the host 102 has attempted to duplicate the media file 502. As a result, the controller 104 performs a blocking procedure to prevent the host 102 from accessing the storage media 106 (step S620).

According to an embodiment, the controller 104 may output dummy data or invalid data to the host 102 regardless of the following read commands and logical addresses. According to another embodiment, the blocking procedure is performed to ignore all subsequent commands issued by the host 102. According to another embodiment, the blocking procedure is stopping to supply power to the controller 104, so as to power off the data storage device 10. That is, the blocking procedure may include, but not are limited to the aforementioned embodiments. Any appropriate method capable of preventing the host 102 from continuously/further accessing the data storage device 10 may be appropriate. Accordingly, the disclosed technique is advantageous to preventing data stored in the storage media 106 from being illegally copied.

Alternatively, when the average data throughput is below the predetermined threshold, the controller 104 allows the operation of the host 102 on the storage media 106 to proceed.

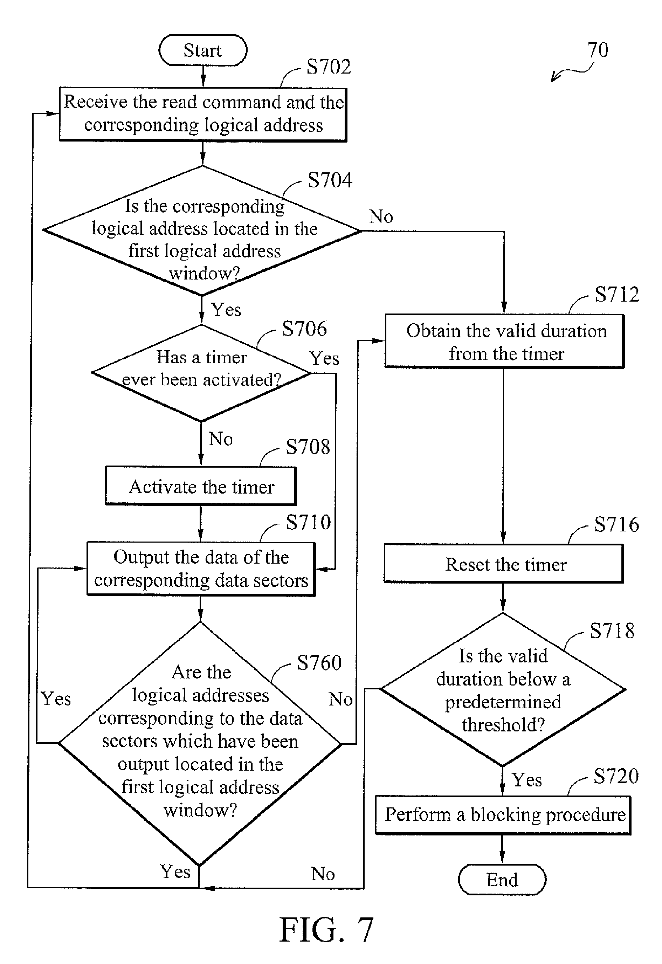

FIG. 7 is a flowchart illustrating a data management method 70 according to another embodiment of the invention. Referring to FIG. 7, steps S702, S704, S710 and S720 are respectively similar to steps S602, S604, S610 and S620 as shown in FIG. 6, while the other steps of this embodiment are described herein below.

According to the data management method 70, it is noted that only the timer is utilized for elapsed time calculation in steps S706 and S708. Thus, when the controller 104 outputs the data sector with the logical address 11000, the controller 104 obtains the valid duration calculated by the timer, such as 1 second (step S712), and then resets the timer (step S716).

Next, the controller 104 determines whether the valid duration, such as 1 second, is below a predetermined threshold, such as 100 seconds (step S718).

When the valid duration is below the predetermined threshold, the controller 104 performs a blocking procedure (step S720). Note that the blocking procedure is illustrated in the aforementioned embodiments, and hence, a further description thereof is omitted.

When the valid duration is not below the predetermined threshold, the controller 104 allows the operation of the host 102 on the storage media 106 to proceed.

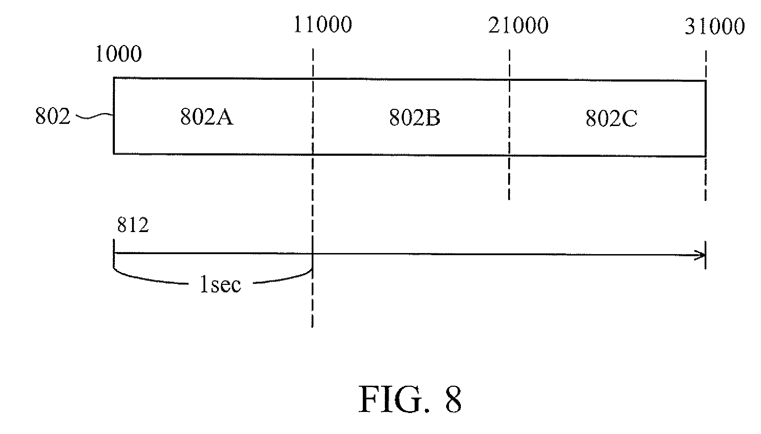

FIG. 8 is a schematic diagram illustrating another embodiment of logical address windows of the invention.

As shown in FIG. 8, another media file 802, such as an authorized audio file, is stored into the data sectors of the storage media 106 with corresponding sequential logical addresses 1000~31000.

In addition, the media file 802 may be divided into three logical address windows 802A, 802B and 802C, but is not limited to this.

Referring to FIG. 8, the logical address window 802A is assigned using logical addresses from 1000 to 11000, the logical address window 802B is assigned using logical addresses from 11000 to 21000 and the logical address window 802C is assigned using logical addresses from 21000 to 31000. That is, the length of each logical address window is equal to one third of the length of the media file 802 and contains 10000 data sectors according to this embodiment.

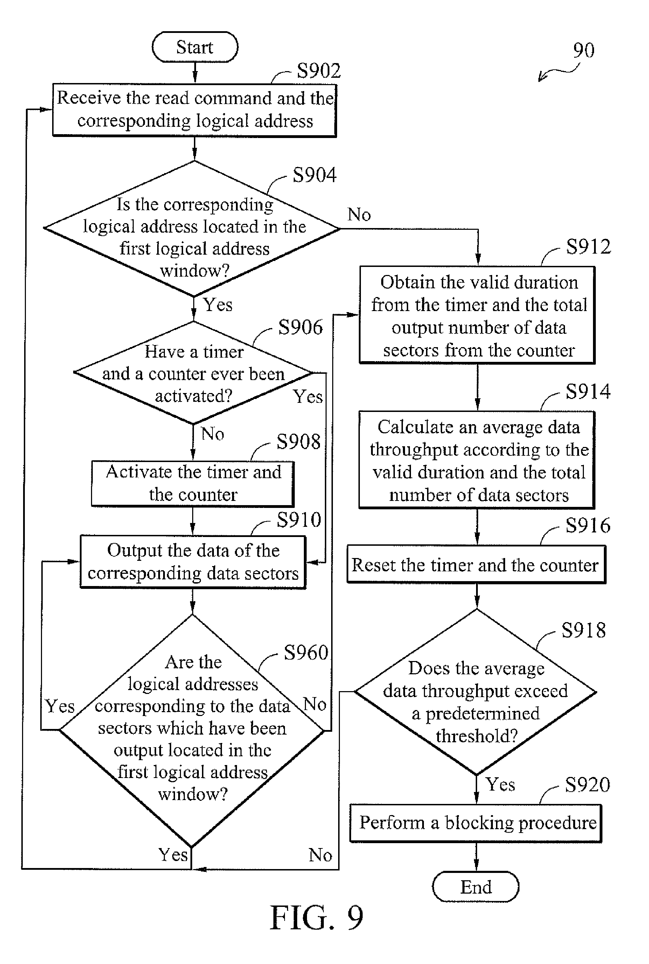

In one embodiment, when the host 102 attempts to duplicate/copy the media file 802, the controller 104 receives a read command 812 and a corresponding start logical address 1000. Further, the host 102 may issue a stop command to the controller 104 to stop the read operation. According to this embodiment, it is assumed that the host 102 issues the stop command to the controller 104 when receiving the data sector with the logical address 30999. A detailed description of preventing the host 102 from copying the media file 802 as shown in FIG. 8 is illustrated herein below with reference to FIG. 9.

FIG. 9 is a flowchart illustrating a data management method 90 according to another embodiment of the invention.

Referring to FIGs. 1, 8 and 9, the controller 104 receives the first read command 812 and the first logical address 1000 corresponding to the first read command 812 (i.e., a start logical address to be read) (step S902). Note that the first read command 812 is a read command with variable data lengths. The controller 104 subsequently determines whether the first logical address 1000 is located in one of the three logical address windows 802A, 802B and 802C of the media file 802 (step S904).

In this embodiment, it is assumed that the first logical address 1000 is located in the first logical address window 802A of the media file 802, and a timer and a counter have not been activated yet (step S906). Thus, the controller 104 further activates the timer and the counter (step S908). Specifically, the timer starts to calculate a valid duration and the counter starts to count the number of data sectors which have been output to the host 102.

Next, the controller 104 sequentially outputs data of the data sectors since the first read command 812 is a read command with variable data lengths (step S910). In addition, the controller 104 determines whether the logical addresses corresponding to the data sectors which have been output are located in the first logical address window 802A (step S960). When the controller 104 outputs the data sector with the logical address 11000, the logical address 11000 is determined to be outside of the first logical address window 802A. In this situation, the controller 104 obtains the valid duration calculated by the timer and the total output number of data sectors counted by the counter. According to the embodiment of FIG. 8, it is assumed that the valid duration required for the read commands which are obtained by the controller 104 from the host 102 is equal to 1 second, and the total output number of data sectors is equal to 10000 (step S912).

Following, the controller 104 calculates an average data throughput according to the total number of data sectors 10000 and the valid duration 1 second, i.e., 10000 (step S914).

Next, the timer and the counter are respectively reset (step S916). Following, the controller 104 then determines whether the average data throughput 10000 exceeds a predetermined threshold, e.g., 400 (step S918). When the average data throughput exceeds the predetermined threshold, the controller 104 determines that the host 102 has attempted to duplicate the media file 802. As a result, the controller 104 performs a blocking procedure to prevent the host 102 from accessing the storage media 106 (step S920).

Alternatively, when the average data throughput is below the predetermined threshold, the controller 104 allows the operation of the host 102 on the storage media 106 to proceed.

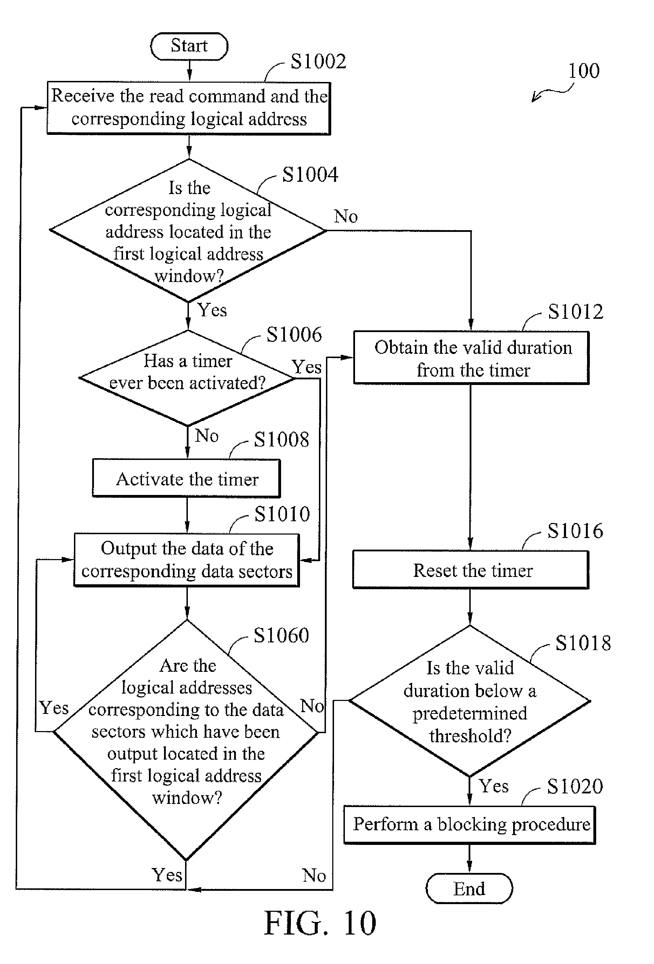

FIG. 10 is a flowchart illustrating a data management method 100 according to another embodiment of the invention. Referring to FIG. 10, steps S1002, S 1004, S1010 and S1020 are respectively similar to steps S902, S904, S910 and S920 as shown in FIG. 9, while the other steps of this embodiment are described below.

According to the data management method 100, it is noted that only the timer is utilized for elapsed time calculation in steps S1006 and S1008. Thus, when the controller 104 outputs the data sector with the logical address 11000, the controller 104 obtains the valid duration calculated by the timer, such as 1 second (step S1012), and then resets the timer (step S1016).

Next, the controller 104 determines whether the valid duration, such as 1 second, is below a predetermined threshold, such as 50 seconds (step S1018).

When the valid duration is below the predetermined threshold, the controller 104 performs a blocking procedure (step S1020). Note that the blocking procedure is illustrated in the aforementioned embodiments, and hence, a further description thereof is omitted.

When the valid duration is not below the predetermined threshold, the controller 104 allows the operation of the host 102 on the storage media 106 to proceed.

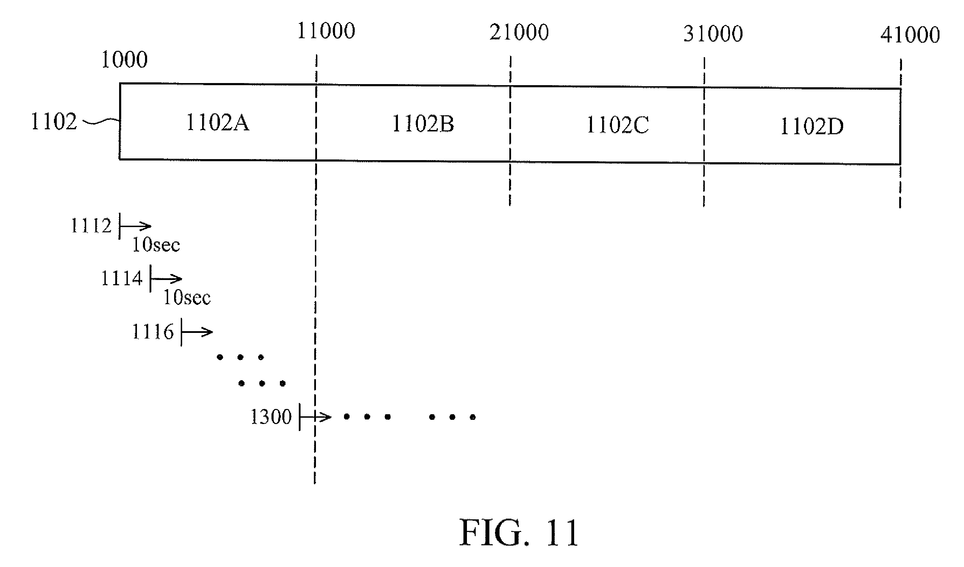

FIG. 11 is a schematic diagram illustrating another embodiment of logical address windows of the invention.

As shown in FIG. 11, another media file 1102, such as an authorized audio file, is stored into the data sectors of the storage media 106 with corresponding sequential logical addresses 1000~41000.

In addition, the media file 1102 may be divided into four logical address windows 1102A, 1102B, 1102C and 1102D, but is not limited to this.

Referring to FIG. 11, the logical address window 1102A is assigned using logical addresses from 1000 to 11000, the logical address window 1102B is assigned using logical addresses from 11000 to 21000, the logical address window 1102C is assigned using logical addresses from 21000 to 31000 and the logical address window 1102D is assigned using logical addresses from 31000 to 41000. That is, the length of each logical address window is equal to a quarter of the length of the media file 1102 and contains 10000 data sectors according to this embodiment.

In one embodiment, when the host 102 attempts to play the media file 1102, the controller 104 receives a plurality of read commands, start logical addresses and data lengths and so on (for simplicity, hereinafter referred to as read commands 1112, 1114, 1116..., 1300 and so on). In this case, the logical addresses from 1000 to 1050 are read in response to the read command 1112, the logical addresses from 1050 to 1100 are read in response to the read command 1114, the logical addresses from 1100 to 1150 are read in response to the read command 1116, the logical addresses from 10980 to 11030 are read in response to the read command 1300, and so on. That is, when the media file 1102 is played, each read command only reads 50 data sectors, i.e., the length of the logical addresses is equal to 50. In operation, a second logical address window is defined to indicate the length of the logical addresses for each data read, such as 50 when the media file 1102 is played. According to one embodiment, the length of the logical addresses for each data read may be determined by the format of the media file 1102. Thus, when playing the media file 1102, the host 112 only reads sufficient amount of data for decoding software. Specifically, each length of the four logical address windows, such as the length of the first logical address window 1102A, i.e., 10000, exceeds the length of the second logical address window, such as 50. More specifically, each length of the four logical address windows is preferably about two, three or more times the length of the second logical address window.

According to the embodiment of FIG. 11, the player needs to read 50 data sectors (25 Kbytes) for every data retrieving and then outputs the audio after decoding the 25 Kbytes of data. When 10 seconds have elapsed, it is necessary for the player to decode the next 50 data sectors. That is, 200 read commands may be required to play the 10000 data sectors in the first logical address window 1102A and the time intervals for the 200 read commands is equal to 1990 seconds.

According to this embodiment, each logical address window is not equal to integer multiples of the read commands. That is, the address range read by the read command 1300 at least is partially located in the first logical address window 1102A while the remaining part of the address range is outside of the first logical address window 1102A. A detailed description in conjunction with a situation in which, when the media file 1102 is played, the host 102 will not be inhibited from accessing the storage media 106, is given below with reference to FIGs. 9 and 10.

Referring to FIGs. 9 and 11, when the user wants to play the media file 1102, the host 102 successively issues a series of read commands, such as 1112, 1114, 1116..., 1130 etc., to the controller 104. From the aforementioned description, when playing the media file 1102, each time of the data retrieving, the host 102 reads 50 data sectors (25 Kbytes). After a period of time have elapsed for decoding and playing, the host 102 then issues the next read command. In this case, the time interval between each read command is equal to 10 seconds. It is noted that the time interval may be different according to the format of the media file 1102.

In this situation, the controller 104 receives the first read command 1112 and the first logical address 1000 corresponding to the first read command 1112 (i.e., a start logical address to be read) (step S902). The controller 104 subsequently determines whether the first logical address 1000 is located in one of the four logical address windows 1102A, 1102B, 1102C and 1102D of the media file 1102 (step S904).

In this embodiment, it is assumed that the first logical address 1000 is located in the first logical address window 1102A of the media file 1102, and a timer and a counter have not been activated yet (step S906). Thus, the controller 104 further activates the timer and the counter (step S908). Specifically, the timer starts to calculate a valid duration and the counter starts to count the number of data sectors which have been output to the host 102.

Next, the controller 104 reads data stored in corresponding data sectors from the storage media 106 according to the first read command 1112 and the first logical address 1000 (i.e., the start logical address to be read), and then outputs the data of the corresponding data sectors to the host 102 (step S910). Specifically, the controller 104 reads and sequentially outputs the 50 data sectors from the storage media 106, and then determines whether the logical addresses corresponding to the data sectors which have been output are located in the first logical address window 1102A (step S960). For example, since the logical address 1000 corresponding to the first data sector which has been output is located in the first logical address window 1102A, the controller 104 proceeds to output a next data sector. Since the logical address 1001 corresponding to the next data sector is still located in the first logical address window 1102A, the controller 104 proceeds to output a further next data sector. In this embodiment, because the logical address 1049 corresponding to the last data sector read and output by the read command 1112 is still located in the first logical address window 1102A, the controller 104 returns to step S902.

When 10 seconds have elapsed, the controller 104 receives the read command 1114 and the logical address 1050 (i.e., a start logical address to be read) (step S902). Then, the controller 104 determines whether the logical address 1050 is still located in the first logical address window 1102A of the media file 1102 (step S904). In this case, because the timer and the counter have been activated upon executing the read command 1112 (step S906), data stored in corresponding data sectors is directly output (step S1110). Note that when sequentially outputting the data sectors, the controller 104 simultaneously determines whether the logical addresses corresponding to the data sectors which have been output are located in the first logical address window 1102A (step S960). The process is similar to the process discussed above with respect to the read command 1112, and hence, a detailed description thereof is omitted.

In this manner, the controller 104 further receives the following read command 1116. As for the process associated with the read commands 1116 it is similar to the process discussed above with respect to the read command 1114, and further descriptions thereof will be omitted.

Next, the controller 104 receives the second read command 1130 and the second logical address 10980 corresponding to the second read command (step S902). As shown in FIG. 11, the second logical address 10980 is still located in the first logical address window 1102A (step S904). Thus, the controller 104 sequentially outputs data of the corresponding data sectors (step S1110) until any logical address corresponding to the data sectors is outside of the first logical address window 1102A, such as the logical address 11000 (step S960). In this situation, the controller 104 obtains the valid duration calculated by the timer and the total output number of data sectors counted by the counter. According to the embodiment of FIG. 11, it is assumed that the valid duration required for the read commands, which are slowly obtained by the controller 104 from the host 102, is about 2000 seconds, and the total output number of data sectors is equal to 10000 (step S912).

Following, the controller 104 calculates an average data throughput according to the total number of data sectors 10000 and the valid duration 2000 seconds, i.e., 5 (step S914).

Next, the timer and the counter are respectively reset (step S916). Following, the controller 104 then determines whether the average data throughput 5 exceeds the predetermined threshold, e.g., 300 (step S918).

According to this embodiment, the average data throughput 5 is below the predetermined threshold 300, and thus the controller 104 determines that the host 102 has attempted to play the media file 1102, not to duplicate the media file 1102. As a result, the access to the storage media 106 from the host 102 is allowed to proceed by the controller 104 (step S902).

In general, the average data throughput 5 associated with playing the media file 1102 is substantially smaller than the average data throughput 10000 associated with duplicating the media file 1102, thereby facilitating setting of the predetermined threshold. For example, the predetermined threshold may be equal to 300, 500 or 2000 etc.

Referring to FIGs. 10 and 11, steps S1002, S1004, S1010 and S1020 as shown in FIG. 10 are respectively similar to steps S902, S904, S910 and S920 as shown in FIG. 9 while the other steps of this embodiment are described below.

According to the data management method 100, it is noted that only the timer is utilized for elapsed time calculation in steps S1006 and S1008. Thus, when the controller 104 outputs the data sector with the logical address 11000, the controller 104 obtains the valid duration calculated by the timer, such as 2000 seconds (step S1012), and then resets the timer (step S 1016).

Next, the controller 104 determines whether the valid duration, such as 2000 seconds, exceeds the predetermined threshold, such as 50 seconds (step S1018).

When the valid duration is not below the predetermined threshold, the controller 104 allows the operation of the host 102 on the storage media 106 to proceed. According to the aforementioned description, the valid duration associated with playing the media file, i.e., 2000 seconds, is considerably larger than the valid duration associated with duplicating the media file, i.e., 1 second. Accordingly, the predetermined threshold may be set as 10 seconds, 20 seconds or 100 seconds.

Additionally, the length of each logical address windows 1102A, 1102B, 1102C and 11102D is larger than the length of each read commands 1112, 1114 and 1116. The length of the logical addresses for each read command may be determined by the format of the media file 1102, such as an MP3 file format, an AVI file format, etc. According to another embodiment, each logical address window may also be determined by the playing time of the media file. For example, each logical address window may be indicative of one-third, one-quarter or one-fifth the playing time of the media file.

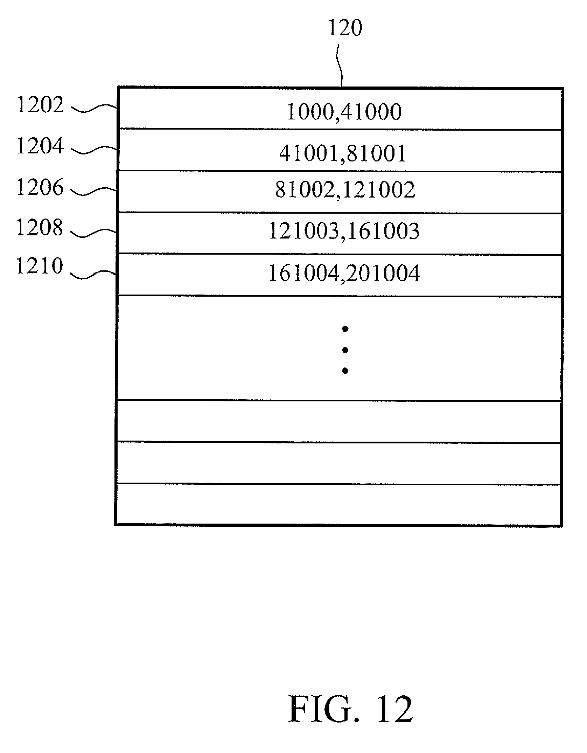

FIG. 12 is a diagram illustrating an embodiment of a content table 120 of the invention.

When the storage media 106 stores several media files to be protected, a start logical address and a final logical address corresponding to each media file may be recorded into one content table.

According to this embodiment, five media files 1202, 1204, 1206, 1208 and 1210 are prohibited from being illegally copied by users. Referring to FIG. 12, the content table 120 is provided for recording the start logical address and the final logical address corresponding to each media file. For example, the controller 104 may obtain the start logical address 1000 and the final logical address 41000 corresponding to the media file 1202. Then, according to the predetermined threshold associated with the valid duration or the predetermined threshold associated with the average data throughput, and the length or format of the media file 1202, the controller 104 may determine each logical address window, such as the logical address windows as shown in FIGs. 2, 5, 8 and 11.

More specifically, for each media file, the controller 104 may further record a window start logical address and a window final logical address corresponding to each logical address window, e.g., the window start logical address 11000 and the window final logical address 21000 corresponding to the logical address window 202B as shown in FIG. 2. As such, the controller 104 may directly obtain the window start logical address and the window final logical address corresponding to each logical address window, so as to reduce the time required for calculating each logical address window and the time required for determining whether the logical address to be read is located in the logical address windows to be protected. In operation, the content table 120 may be stored in system blocks or other reserved blocks of the storage media 106.

From the aforementioned description, the data storage device and the data management methods thereof according to the embodiments of the invention advantageously provide an easy, reliable and feasible manner capable of preventing data to be protected from being illegally copied, without further sacrificing the performance of access to the data storage device.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A data storage device, which is coupled to a host, comprising:
a storage media having a plurality of data sectors for storing data; and
a controller coupled to the storage media for sequentially receiving one or more read commands and one or more logical addresses which are corresponding to the one or more read commands from the host, reading a plurality of first data sectors from the storage media according to the one or more read commands and the corresponding one or more logical addresses, outputting data of the first data sectors to the host, calculating a valid duration required for the one or more read commands, calculating an average data throughput according to the number of the first data sectors and the valid duration, and determining whether the average data throughput exceeds a predetermined threshold,
wherein the controller performs a blocking procedure to prevent the storage media from being accessed when the average data throughput exceeds the predetermined threshold.

2. The data storage device as claimed in claim 1, wherein the number of the first data sectors divided by the valid duration is equal to the average data throughput.

3. The data storage device as claimed in claim 1, wherein the controller further activates a timer for calculating the valid duration and a counter for counting the number of the first data sectors when a first logical address corresponding to a first read command of the one or more read commands is located in a first logical address window.

4. The data storage device as claimed in claim 3, wherein the timer and the counter are respectively reset when the data stored in data sectors of the first logical address window are output to the host.

5. The data storage device as claimed in claim 3, wherein the controller calculates the average data throughput according to the timer and the counter when the controller receives a second read command and a corresponding second logical address and the second logical address is outside of the first logical address window.

6. The data storage device as claimed in claim 3, wherein the first logical address window is determined by the predetermined threshold and playing time of a media file.

7. The data storage device as claimed in claim 3, wherein the first logical address window is determined by a media file fonnat.

8. The data storage device as claimed in claim 7, wherein the first logical address window exceeds a second logical address window and the second logical address window is indicative of a length of the logical addresses for each data read when the media file is played.

9. The data storage device as claimed in claim 6, wherein the media file is stored into the data sectors of the storage media with sequential logical addresses.

10. The data storage device as claimed in claim 6, wherein the length of the first logical address window is equal to a quarter of the length of the media file.

11. A data storage device, which is coupled to a host, comprising:
a storage media having a plurality of data sectors for storing a media file, wherein the media file having a plurality of logical address windows is stored into the data sectors with sequential logical addresses; and
a controller coupled to the storage media for receiving a first read command and a first logical address which is corresponding to the first read command from the host, determining whether the first logical address is located in a first logical address window of the logical address windows, activating a timer and a counter when the first logical address is located in the first logical address window, reading a plurality of first data sectors from the storage media according to the first logical address, outputting data of the first data sectors to the host, obtaining a valid duration calculated by the timer and the number of the first data sectors counted by the counter when any logical address corresponding to the first data sectors is outside of the first logical address window, calculating an average data throughput according to the number of the first data sectors and the valid duration, and determining whether the average data throughput exceeds a predetermined threshold,
wherein the controller performs a blocking procedure to prevent the storage media from being accessed when the average data throughput exceeds the predetermined threshold.

12. The data storage device as claimed in claim 11, wherein the blocking procedure is performed to output dummy data when a second read command is received.

13. The data storage device as claimed in claim 11, wherein the blocking procedure is performed to ignore a second read command when the second read command is received.

14. The data storage device as claimed in claim 11, wherein the storage media comprises a content table for recording a start logical address and a final logical address of the media file.

15. The data storage device as claimed in claim 14, wherein the controller determines the range of the first logical address window according to the content table.

16. The data storage device as claimed in claim 14, wherein the first logical address window is determined by the predetermined threshold and the length of the media file.

17. The data storage device as claimed in claim 14, wherein the length of the first logical address window is equal to a quarter of the length of the media file.

18. A data management method for a data storage device, wherein the data storage device comprises a storage media having a plurality of data sectors and the data management method comprises:
receiving a plurality of read commands and corresponding logical addresses, wherein each logical address is located in a first logical address window;
reading a plurality of first data sectors from the storage media according to the read commands and the logical addresses;
outputting data of the first data sectors;
calculating a valid duration required for the read commands;
calculating an average data throughput according to the number of the first data sectors and the valid duration; and
performing a blocking procedure to prevent the storage media from being accessed when the average data throughput exceeds a predetermined threshold.

19. The data management method as claimed in claim 18, wherein the blocking procedure comprises the step of:
outputting dummy data when a second read command is received.

20. The data management method as claimed in claim 18, wherein the blocking procedure comprises the step of:
ignoring a second read command when the second read command is received.

21. The data management method as claimed in claim 18, wherein the blocking procedure comprises the step of:
powering off the data storage device.

22. The data management method as claimed in claim 18, wherein the valid duration is a period of time which has been elapsed for outputting the data of the first data sectors.

23. The data management method as claimed in claim 18, wherein the valid duration is a period of time which has been elapsed for outputting data of all data sectors in the first logical address window.

24. A data management method for a data storage device having a storage media, wherein the storage media comprises a plurality of data sectors for storing a media file having a plurality of logical address windows and the data management method comprises:
receiving a first read command and a corresponding first logical address, wherein the first logical address is located in a first logical address window;
starting to calculate a valid duration;
reading a plurality of first data sectors from the storage media according to the first read command and the first logical address;
sequentially outputting data of the first data sectors;
obtaining the number of the first data sectors and the valid duration when any logical address corresponding to the first data sectors is outside of the first logical address window;
calculating an average data throughput according to the number of the first data sectors and the valid duration; and
performing a blocking procedure to prevent the storage media from being accessed when the average data throughput exceeds a predetermined threshold.

25. A data management method for a data storage device having a storage media, wherein the storage media comprises a plurality of data sectors for storing a media file having a plurality of logical address windows and the data management method comprises:
receiving a first read command and a corresponding first logical address, wherein the first logical address is located in a first logical address window;
starting to calculate a valid duration;
reading a plurality of first data sectors from the storage media according to the first read command and the first logical address;
sequentially outputting data of the first data sectors;
obtaining the valid duration when any logical address corresponding to the first data sectors is outside of the first logical address window; and
performing a blocking procedure to prevent the storage media from being accessed when the valid duration is below a predetermined threshold.

26. The data storage device as claimed in claim 25, wherein the valid duration is a period of time which has been elapsed for outputting data of all data sectors in the first logical address window.

27. The data storage device as claimed in claim 25, wherein the media file is stored into the data sectors of the storage media with sequential logical addresses.

28. A data management method for a data storage device having a storage media, wherein the storage media comprises a plurality of data sectors for storing a media file having a plurality of logical address windows and the data management method comprises:
receiving a first read command and a corresponding first logical address, wherein the first logical address is located in a first logical address window;
starting to calculate a valid duration;
reading a plurality of first data sectors from the storage media according to the first read command and the first logical address;
sequentially outputting data of the first data sectors;
receiving a second command and a corresponding second logical address;
obtaining the number of the first data sectors and the valid duration when the second logical address is outside of the first logical address window;
calculating an average data throughput according to the number of the first data sectors and the valid duration; and
performing a blocking procedure to prevent the storage media from being accessed when the average data throughput exceeds a predetermined threshold.

29. A data management method for a data storage device having a storage media, wherein the storage media comprises a plurality of data sectors for storing a media file having a plurality of logical address windows and the data management method comprises:
receiving a first read command and a corresponding first logical address, wherein the first logical address is located in a first logical address window;
starting to calculate a valid duration;
reading a plurality of first data sectors from the storage media according to the first read command and the first logical address;
sequentially outputting data of the first data sectors;
receiving a second command and a corresponding second logical address;
obtaining the valid duration when the second logical address is outside of the first logical address window; and
performing a blocking procedure to prevent the storage media from being accessed when the valid duration is below a predetermined threshold.

30. A data management method for a data storage device having a storage media, wherein the storage media comprises a plurality of data sectors for storing a media file having a plurality of logical address windows and the data management method comprises:
sequentially receiving one or more read commands and corresponding one or more logical addresses thereto, wherein a first logical address corresponding to a first read command is located in a first logical address window;
reading a plurality of first data sectors from the storage media according to the one or more read commands and the corresponding one or more logical addresses;
activating a counter for counting the number of the read commands which have been executed;
obtaining a count from the counter when any logical address corresponding to the first data sectors is outside of the first logical address window; and
performing a blocking procedure to prevent the storage media from being accessed when the count from the counter is equal to or below a predetermined threshold.

31. A data management method for a data storage device having a storage media, wherein the storage media comprises a plurality of data sectors for storing a media file having a plurality of logical address windows and the data management method comprises:
sequentially receiving one or more read commands and corresponding one or more logical addresses thereto, wherein a first logical address corresponding to a first read command is located in a first logical address window;
reading a plurality of first data sectors from the storage media according to the one or more read commands and the corresponding one or more logical addresses;
activating a counter for counting the number of the read commands which have been executed;
obtaining a count from the counter when a second logical address corresponding to a second read command is outside of the first logical address window; and
performing a blocking procedure to prevent the storage media from being accessed when the count from the counter is equal to or below a predetermined threshold.
